# EUROPEAN PATENT SPECIFICATION

(11) **EP 4 018 298 B1**
(45) Date of publication and mention of the grant of the patent: **14.10.2026**
(21) Application number: 20742701.4
(22) Date of filing: 16.07.2020
(51) Int. Cl.: G06F 8/30, G06F 8/36, G06N 3/006, G06N 3/08, G06N 20/00

(54) **A SYSTEM AND METHOD FOR DEVELOPMENT AND DISTRIBUTION OF MOBILITY SOLUTIONS**
SYSTEM UND VERFAHREN ZUR ENTWICKLUNG UND VERTEILUNG VON MOBILITÄTSLÖSUNGEN
SYSTÈME ET PROCÉDÉ DE DÉVELOPPEMENT ET DE DISTRIBUTION DE SOLUTIONS DE MOBILITÉ

(30) Priority: 21.08.2019 IN 201941033652
(43) Date of publication of application: 29.06.2022
(73) Proprietor: Robert Bosch GmbH, 70442 Stuttgart (DE); Bosch Limited, Adugodi, Bangalore 560 030 (IN)
(72) Inventor: PRASHANTH, Anantha, Bangalore 560078 (IN); PRADEEP, Ramachandra, Bangalore 560061 (IN)
(74) Representative: Bee, Joachim
(86) International application number: PCT/EP2020/070121
(87) International publication number: WO 2021/032372

(56) References cited:
- US-A1- 2014 282 357

## Description

### Field of the invention:

The present invention relates to a system and method for development and distribution of vehicle mobility solutions.

### Background of the invention:

Developing Internet-hosted business applications composed of web services and software for use in distributed development environments where applications and application components interoperate to perform requested business functions. The invention utilize a software development application services provider module (DASP), an lnstantiator module, a Builder module, an Applications Service Provider (ASP) Infrastructure Platform (AIP) module, and a hosted production environment module. Developers and testers situated in diverse locations so that a larger pool of skilled people can be employed, the work can be done around the clock by using people all over the globe, and the costs can be reduced by directing work to people in countries with lower labor rates. The system and method of the present invention increases efficiencies and reduces costs to all parties by partnering the developers with third parties who are brought in at the beginning of development.

In this context, US 2014/282357 A1 discloses a cloud-hosted platform for the development and distribution of mobile applications by selecting different components as building blocks for the creation of software products.

### Brief description of the accompanying drawings:

An embodiment of the disclosure is described with reference to the following accompanying drawing,
Fig. 1 illustrates a block diagram of a system for development and distribution of mobility solutions, according to an embodiment of the present invention, and
Fig. 2 illustrates a method for developing and distributing of mobility solutions, according to the present invention.

### Detailed description of the embodiments:

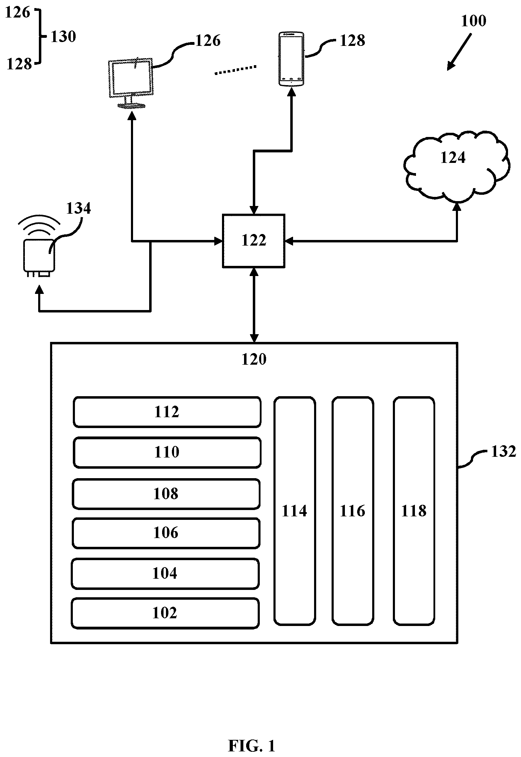

Fig. 1 illustrates a block diagram of a system for development and distribution of mobility solutions, according to an embodiment of the present invention. The system 100 comprises a server 124 or cloud, at least one terminal device 130 connectable to the server 124 through at least one of a wired connection and / or a wireless connection, and at least one processor 122. The processor 122 establishes a communication between the server 124 and at least one of the terminal device 130 after an authentication. The wired connection refers to Local Area Network (LAN), Universal Serial Bus (USB) based connection and other similar cables and adapters which enable connection to a network. The wireless connection refers to digital wireless telephony technologies such as Time Division Multiple Access (TDMA), Code Division Multiple Access (CDMA), and Global System for Mobile Communication (GSM), Wi-Fi, Bluetooth, Wide Area Network (WAN) and the like. Further, the network is an internet (worldwide) or intranet (local). The system 100 is characterized by, the processor 122 and the server 124, provides a framework/platform for development, and distribution of solutions related to vehicles. The processor 122 adapted to, render plurality of modules 120 (can also be called as layers) in at least one terminal device 130 based on an access request. The plurality of modules 120 are displayable on a display interface of the at least one terminal device 130. The processor 122 further executes instructions generated from the plurality of modules 120 for development of the solution, where the instructions are generated by a user of the at least one terminal device 130 which is in communication with the server 124. The plurality of modules 120 are accessible through an input unit of the at least one terminal device 130, each of the plurality of modules 120 are usable alone and in combination. The processor 122 stores the developed solutions in the server 124 for distribution. The processor 122 is an integral part of the server 124 or cloud.

In accordance to an embodiment, the plurality of modules 120 are selected from group comprising a device module 102, a firmware module 104, a data module 106, an analysis module 108, a solution module 110, a display module 112, a digital infrastructure module 114, a engagement module 116 and a business module 118.

The plurality of modules 120 are rendered in a display interface, such as a screen or a touch screen, etc. In other words, the plurality of modules 120 are loaded in the terminal device 130. The access to the plurality of modules 120 is through a web front, or website or portal 132, which is opened in a web browser. Further, the plurality of modules are accessible through a mobile application as well.

The plurality of modules 120 is now explained. The instructions corresponds to commands, logics, programs, action, selection and the like, while using the plurality of modules 120. The device module 102 comprises details of at least one of a device and modules of the device which gathers or generates data required for at least one solution. The device module 102 also provides access to the at least one device or modules of device through a source selected from a proprietary source and an ecommerce source. The device module 102 comprises list and details of devices or modules/components, such as telematics device 134, which generates data relevant for the solution development. The devices and the modules of the devices in the device module 102 are hardware agnostic. The device and/or modules of the device will now be collectively referred to as the device for easy intelligibility.

The firmware module 104 provides access to data required for operation of the at least one device selected from the device module 102 with the vehicle along with the digital infrastructure module 114. The firmware module 104 provides firmware comprising logics, program, or set of instructions for each device in the device module 102. The firmware is either pre-stored or developed in collaboration with users. The firmware enables interfacing and communicating with and between the vehicle and connected infrastructure. The firmware in the firmware module 104 are device agnostic and a server or cloud agnostic.

The data module 106 stores and preprocesses data generated by the at least one device. The data module 106 enables processing the data at the device or for edge computing or processing in the server 124 infrastructure. The data module 106 acts as a "data lake" for the data generated and processed through the data module 106. The data module 106 comprises sub modules in the form of plug-ins/functions (other forms also possible) such as harmonizer, featuring, optimizer, quantifier etc. Again, the plug-ins are made as per requirements or used from existing list. In case of new data modules 106 is needed, then the framework provides necessary tools to build those as well, without the need for separate installations. The processed data is made available for a user of the terminal device 130 for development of the at least one solution.

The analysis module 108 provides at least one sub-modules for detailed processing of the data received from the data module 106. The at least one sub-module is selected from at least one of Artificial Intelligence (AI), Deep Learning (DL), Machine Learning (ML), Behavioral Science (BS) and the like. The sub modules of the analysis module 108 are created based on domain experience and expertise in the automotive sector. For example, data based engine model to facilitate model based calibration of Internal combustion Engine (ICE), Electric Vehicle (EV), hybrid vehicle for different types of vehicles such as two-wheeler, three-wheeler, four-wheeler, Buses, Trucks, etc., a physics based engine model, fuel combustion models, catalyst model, exhaust model, vehicle driving model, powertrain model, energy management model, thermal management model etc.

The solution module 110 is a repository of problems, ongoing solution, and developed solutions. The users comprises developers, programmers, data scientists, engineers, researchers, scholars, an interested party, an organization, etc. The problems are posted and the user either independently or collaboratively, work to provide solution for the problem. The users are free to develop a solution for their specific problem which is not even posted. The developed solutions, problems, and ongoing solutions are available for use or download through the solution module 110. The solutions are provided as mobile applications or set of instructions which are executable by a computer or control unit, controller, etc. The solutions comprises all solutions which relates to the vehicles. One solution is parking of the vehicles, other solution is phone based vehicle diagnostics and the like. The solutions are either executed within the vehicle or by external tools for the vehicles.

The display module 112 provides plurality of tools for development of a User Interface (UI) of the at least one solution, for example, Graphical UI for infotainment unit of the vehicle, interactive UI for a mobile device of a user etc.

The digital infrastructure module 114 provides plurality of sub modules for connectivity needed for secure implementation and deployment of the developed solutions for the vehicle. The digital infrastructure module 114 is the bedrock to facilitate any development on the connected solutions, which defines the standard protocols, security features, payment gateways and many more, apart from being vendor agnostic, server or cloud agnostic

The engagement module 116 enables communication, interaction with at least one other user with respect/reference/regards to the device module 102, the firmware module 104, the data module 106, the analysis module 108, the solution module 110, the display module 112, the digital infrastructure module 114, and the business module 118. The engagement module 116 enables a larger community of resources to come together and work on a common cause. The approach can be inside-out (where the talent pool is within an organization) and outside-in (where the scope is beyond the organization which facilitates, academia, partners, start-ups, government etc.) or combination of both.

The business module 118 enables finding of customers and monetization of developed solutions. The business module 118 is the key enabler to generate revenue and develop a pricing strategy and maintain accounting structure, but not limited to the same. The business module 118 provides an online or digital marketplace for enabling business.

According to the present invention, the system 100 is used by at least two users, namely, a solution requester and a solution provider. The solution requester posts a problem using the UI of website or portal 132 which then gets stored in solution module 110, and the solution provider solves the problem using the at least one module 120. The solution provider solves the requested solution by any one of independently and in communication with at least one a second solution provider. The at least two users are selected from at least one of same organization and disparate organization.

An example to understand the working of the present invention is explained. The same must not be understood in limiting manner. Consider an organization with multiple employees or associates under different departments. The solution framework of the present invention is being used in the organization, such as in the form of license, subscription etc. A working group is formed in the organization to solve problem of emission from vehicles. A first member of the working group opens the solution framework on a computer 126, such as laptop, desktop, through a web browser. The first member logs-in to the solution framework using authorization credentials. Once logged-in, the first member posts the problem statement in the solution framework through the UI of website or portal 132 which then gets stored in solution module 110. A second member of the working group logs-in the solution framework using a smart phone 128, either through an application or browser. The second member reads the problem statement, and browses through the device module 102 to select the appropriate device. The second member selects a data logging device which needs to be fit to the vehicle. The data logging device is ordered/bought from the device module 102, after necessary approvals. The data logging device is fit to at least one test vehicle. For the functioning of the data logging device, a third member of the team selects an appropriate firmware, from the firmware module 104, to interface with particular make of the vehicle. If a particular firmware is unavailable, the third member approaches a firmware team within the community through the engagement module 116. Through engagement module 116, the firmware is made and installed in the data logging device to function with the vehicle. Now for several days or months, data is recorded from the vehicle through the data logging device. Now, the third member uses the data module 106 to store and preprocess the recorded data through to understand certain patterns. Now, either the data is processed by available plug-ins or a specific plug-in made by approaching an expert through engagement module 116 (either internal to the organization or external). The processed data is combined with existing engine model, data based statistical model, catalyst model etc. available in the analysis module 108. Finally, a solution of emission prediction and control is developed, which is made available in the solution module 110. A designer is approached by the working group, through the engagement module 116 to design a user interface for the emission prediction. The designer uses the display module 112 for the same. In the meantime, an associate provides a suggestion for additional feature to be added in the emission prediction.

After having developed the emission prediction, the same is tested in a virtual environment within the solution framework, using an exhaust model and catalyst model. The emission prediction is then implemented in the vehicle using one or more sub modules of the digital infrastructure module 114. Further, the concept of emission prediction is monetized by reaching to potential customers through the business module 118. The business module 118 also assists in managing costs associated with the development of the emission prediction as the solution. The emission prediction solution is also made available as an application in the solution module 110 for distribution. Any third party interested in the same solution, pays the required fees and implements in the vehicle. This is just an example, to explain the working of the invention. This is applicable to other numerous types of solutions related to the vehicle using a single solution framework, but not restricted only to the solutions arising from vehicle.

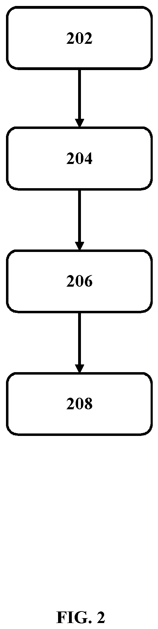

Fig. 2 illustrates a method for developing and distributing mobility solutions, according to the present invention. The method comprising the steps of, a step 202 comprising establishing a connection between the server 124 and the terminal device 130. A step 204 comprises rendering plurality of modules 120 in the terminal device 130. The plurality of modules 120 accessible by the input unit of the terminal device 130, and each of the plurality of modules 120 are usable alone and in combination. A step 206 comprises, developing solutions relating to vehicles through the plurality of modules 120. A step 208 comprises, storing and distributing the developed solutions through the server 124. The plurality of modules 120 are selected from group comprising the device module 102, the firmware module 104, the data module 106, the analysis module 108, the solution module 110, the display module 112, the digital infrastructure module 114, the engagement module 116 and the business module 118.

The device module 102 enables selecting and accessing, the at least one of the device and the modules of the device, assisting in generating data required for development of at least one solution. The device module 102 enables acquiring of the devices through the source linked with the server 124 selected from a proprietary source and an ecommerce source (third party). The firmware module 104 enables interfacing and communication, of the at least one device selected from the device module 102 with the vehicle and the digital infrastructure module 114.

The data module 106 enables preprocessing, of the raw data generated by the at least one device. The raw data and the preprocessed data are made available for the development of the at least one solution. The analysis module 108, enables selective analyzing of the data received from the at least one of device module 102 and the data module 106. The analysis module 108 is selected from at least one of Artificial Intelligence (AI), Deep Learning (DL), Machine Learning (ML), Behavioral Science (BS) and the like. The solution module 110 provides a repository of at least one problem, a partly solved problem or ongoing solution and developed solutions. The display module 112 enables developing of UIs for the developed solution.

The digital infrastructure module 114 enables implementing and deploying of the developed solutions. The engagement module 116 enables access, connection and communication, for the available/required data, with communities, networks for development of the at least one solution, and the business module 118 enables monetizing the developed solutions.

The method also comprises, accessing the server 124, by at least one solution requester and a solution provider. The solution requester posts a problem using the solution module 110, and the solution provider solves the problem using the plurality of modules 120. The solution provider solves the problem by either independently or in collaboration with at least one a second solution provider.

According to the present invention, the solution framework provides platform of platforms for developing and provisioning solutions through an online application store based portal. The principle difference is in the context of coverage, multiple platforms and the orchestration of various part of the solution framework in the mobility domain of the vehicles. The present invention is an enabler for open source communities to contribute for mobility related problems, and enables small scale companies or start-ups to scale, large scale companies to diversify into platform and solution business in the connected world. The present invention is the building blocks around the connected mobility ecosystem and provides a platform to enable solution development. The idea of the platform is to provide building blocks through each module and hence enable the developers or users who access the framework to build solutions to cater mobility and beyond.

It should be understood that embodiments explained in the description above are only illustrative and do not limit the scope of this invention. Many such embodiments and other modifications and changes in the embodiment explained in the description are envisaged. The scope of the invention is only limited by the scope of the claims.

## Claims

1. A system (100) for collaborative development and distribution of solutions, said system (100) comprising:
a server (124);
at least one terminal device (130) connectable to said server (124) through at least one of a wired connection and a wireless connection, and
at least one processor (122), said processor (122) establishes a communication between said server (124) and at least one of said terminal device (130) after an authentication, said processor (122) and said server (124) provides a framework for development and distribution of solutions related to vehicles, and adapted to render a plurality of modules (120) in at least one terminal device (130) based on an access request, said plurality of modules (120) are displayable on a display interface of said at least one terminal device (130), execute instructions generated from said plurality of modules (120) for development of a solution, said instructions generated by a user of said at least one terminal device (130) which is in communication with said server (124), said plurality of modules (120) being accessible through an input unit of said at least one terminal device (130), each of said plurality of modules (120) are usable alone and in combination, and store said developed solutions in said server for distribution,
wherein said plurality of modules (120) are selected from a group comprising a device module (102), a firmware module (104), a data module (106), an analysis module (108), a solution module (110), a display module (112), a digital infrastructure module (114), an engagement module (116) and a business module (118),
wherein said device module (102) comprises details of at least one of a device and modules of said device, which gathers or generates data required for at least one solution, said device module (102) also provides access to said at least one of said device and modules of said device through a source selected from a proprietary source and an ecommerce source,
wherein said firmware module (104) provides data required for operation of said at least one device selected from said device module (102) with said vehicle and said digital infrastructure module (114),
wherein said data module (106) stores and preprocesses raw data generated by said at least one device, said raw data and processed data are made available for said user of said at least one terminal device (130) for development of said at least one solution,
wherein said analysis module (108) provides at least one sub-module for detailed processing of said data received from said data module (106), said at least one sub-module is selected from at least one of Artificial Intelligence (AI), Deep Learning (DL), Machine Learning (ML), and Behavioral Science (BS),
wherein said solution module (110) is a repository of problems, ongoing solution, and developed solutions,
wherein said display module (112) provides plurality of tools for development of a user interface (UI) of said at least one solution,
wherein said digital infrastructure module (114) provides a plurality of sub modules for connectivity needed for secure implementation and deployment of said developed solutions for said vehicle,
wherein said engagement module (116) enables communication and interaction with at least one other user with respect to said device module (102), said firmware module (104), said data module (106), said said analysis module (108), said solution module (110), said display module (112), said digital infrastructure module (114), and said business module (118), and
wherein said business module (118) enables finding of customers and monetization of developed solutions.

2. The system (100) as claimed in claim 1, wherein said system (100) is used by at least two users, namely, a solution requester and a solution provider, said solution requester posts a problem using an interface, which then gets stored in said solution module (110), and said solution provider solves said problem using said plurality of modules (120), wherein said solution provider solves said requested solution by any one of independently and in communication with at least one second solution provider.

3. The system (100) as claimed in claim 2, wherein said at least two users are selected from at least one of a same organization, and disparate organizations.

4. A method for collaborative development and provisioning of solutions, said method comprising the steps of:
establishing a connection between a server (124) and a terminal device (130);
rendering a plurality of modules (120) in said terminal device (130), said plurality of modules (120) being accessible by an input unit of said terminal device (130), and each of said plurality of modules (120) are usable alone and in combination;
developing solutions relating to vehicles through said plurality of modules (120), and
storing and distributing said developed solutions through said server (124), wherein said plurality of modules (120) are selected from a group comprising a device module (102), a firmware module (104), a data module (106), an analysis module (108), a solution module (110), a display module (112), a digital infrastructure module (114), an engagement module (116) and a business module (118), and
wherein, selecting and accessing, through said device module (102), at least one of a device and modules of said device for generating data required for at least one solution, said device module (102) enables acquiring of said at least one of said device and modules of said device through a source linked with said server (124) selected from a proprietary source and an ecommerce source,
enabling interfacing and communication, through said firmware module (104), of said at least one device selected from said device module (102) with said vehicle and said digital infrastructure module (114),
storing and preprocessing, through said data module (106), raw data generated by said at least one device, said raw data and processed data available for development of said at least one solution,
selectively analyzing, through said analysis module (108), of said data received from at least one of said device module (102) and said data module (106), said analysis module (108) is selected from at least one of Artificial Intelligence (AI), Deep Learning (DL), Machine Learning (ML), and Behavioral Science (BS),
providing, through said solution module (110), a repository of at least one problem, a partly solved problem and developed solutions,
developing, through said display module (112), user interfaces (UIs) for said developed solution,
implementing and deploying, through said digital infrastructure module (114), said developed solutions,
accessing, connecting and communicating, through said engagement module (116), available data, communities, and networks for development of said at least one solution, and
monetizing, through said business module (118), said developed solutions.

5. The method as claimed in claim 4, wherein accessing said server (124), by at least one solution requester and a solution provider, said solution requester posts a problem using said solution module (110), and said solution provider solves said problem using said plurality of modules (120), wherein said solution provider solves said problem by any one of independently, collaboration with at least one second solution provider,

6. The method as claimed in claim 5, wherein said at least two users are from at least one of same organization and disparate organizations.

## Patentansprüche

1. System (100) zur kollaborativen Entwicklung und Verteilung von Lösungen,
wobei das System (100) Folgendes umfasst:
einen Server (124);
mindestens ein Endgerät (130), das mit dem Server (124) über eine drahtgebundene Verbindung und/oder eine drahtlose Verbindung verbindbar ist, und mindestens einen Prozessor (122), wobei der Prozessor (122) eine Kommunikation zwischen dem Server (124) und mindestens einem von dem Endgerät (130) nach einer Authentifizierung herstellt, wobei der Prozessor (122) und der Server (124) einen Rahmen für die Entwicklung und Verteilung von Lösungen in Bezug auf Fahrzeuge bereitstellen und angepasst sind zum Rendern mehrerer Module (120) in mindestens einem Endgerät (130) basierend auf einer Zugriffsanforderung, wobei die mehreren Module (120) auf einer Anzeigeschnittstelle des mindestens einen Endgeräts (130) anzeigbar sind, Ausführen von Anweisungen, die von den mehreren Modulen (120) zur Entwicklung einer Lösung erzeugt werden, wobei die Anweisungen durch einen Benutzer des mindestens einen Endgeräts (130) erzeugt werden, das mit dem Server (124) in Kommunikation steht, wobei die mehreren Module (120) über eine Eingabeeinheit des mindestens einen Endgeräts (130) zugänglich sind, jedes der mehreren Module (120) allein und in Kombination verwendbar ist, und
Speichern der entwickelten Lösungen in dem Server zur Verteilung,
wobei die mehreren Module (120) aus einer Gruppe ausgewählt sind, die ein Vorrichtungsmodul (102), ein Firmwaremodul (104), ein Datenmodul (106), ein Analysemodul (108), ein Lösungsmodul (110), ein Anzeigemodul (112), ein digitales Infrastrukturmodul (114), ein Einbeziehungsmodul (116) und ein Geschäftsmodul (118) umfasst,
wobei das Vorrichtungsmodul (102) Details einer Vorrichtung und/oder von Modulen der Vorrichtung umfasst, die Daten sammelt oder erzeugt, die für mindestens eine Lösung erforderlich sind, das Vorrichtungsmodul (102) auch Zugriff auf die Vorrichtung und/oder die Module der Vorrichtung über eine Quelle bereitstellt, die aus einer proprietären Quelle und einer E-Commerce-Quelle ausgewählt ist,
wobei das Firmwaremodul (104) Daten bereitstellt, die für den Betrieb der mindestens einen Vorrichtung erforderlich sind, die aus dem Vorrichtungsmodul (102) mit dem Fahrzeug und dem digitalen Infrastrukturmodul (114) ausgewählt ist,
wobei das Datenmodul (106) Rohdaten speichert und vorverarbeitet, die durch die mindestens eine Vorrichtung erzeugt werden, wobei die Rohdaten und verarbeiteten Daten für den Benutzer der mindestens einen Endgerätevorrichtung (130) zur Entwicklung der mindestens einen Lösung zur Verfügung gestellt werden,
wobei das Analysemodul (108) mindestens ein Untermodul zur detaillierten Verarbeitung der von dem Datenmodul (106) empfangenen Daten bereitstellt, das mindestens eine Untermodul aus mindestens einem von künstlicher Intelligenz (KI), Deep Learning (DL), Machine Learning (ML) und Behavioral Science (BS) ausgewählt ist,
wobei das Lösungsmodul (110) ein Repository von Problemen, fortlaufender Lösung und entwickelten Lösungen ist,
wobei das Anzeigemodul (112) mehrere Werkzeuge zur Entwicklung einer Benutzerschnittstelle (UI) der mindestens einen Lösung bereitstellt,
wobei das digitale Infrastrukturmodul (114) mehrere Untermodule für Konnektivität bereitstellt, die für eine sichere Implementierung und den Einsatz der entwickelten Lösungen für das Fahrzeug benötigt werden,
wobei das Einbeziehungsmodul (116) Kommunikation und Interaktion mit mindestens einem anderen Benutzer in Bezug auf das Vorrichtungsmodul (102), das Firmwaremodul (104), das Datenmodul (106), das Analysemodul (108), das Lösungsmodul (110), das Anzeigemodul (112), das digitale Infrastrukturmodul (114) und das Geschäftsmodul (118) ermöglicht, und
wobei das Geschäftsmodul (118) das Finden von Kunden und die Monetarisierung von entwickelten Lösungen ermöglicht.

2. System (100) nach Anspruch 1, wobei das System (100) von mindestens zwei Benutzern verwendet wird, nämlich einem Lösungsanforderer und einem Lösungsanbieter, wobei der Lösungsanforderer ein Problem unter Verwendung einer Schnittstelle postet, die dann in dem Lösungsmodul (110) gespeichert wird, und der Lösungsanbieter das Problem unter Verwendung der mehreren Module (120) löst, wobei der Lösungsanbieter die angeforderte Lösung durch einen beliebigen von unabhängig und in Kommunikation mit mindestens einem zweiten Lösungsanbieter löst.

3. System (100) nach Anspruch 2, wobei die mindestens zwei Benutzer aus mindestens einer von einer gleichen Organisation und unterschiedlichen Organisationen ausgewählt sind.

4. Verfahren zur kollaborativen Entwicklung und Bereitstellung von Lösungen,
wobei das Verfahren die folgenden Schritte umfasst:
Herstellen einer Verbindung zwischen einem Server (124) und einem Endgerät (130);
Rendern mehrerer Module (120) in der Endgerätevorrichtung (130), wobei die mehreren Module (120) durch eine Eingabeeinheit der Endgerätevorrichtung (130) zugänglich sind und jedes der mehreren Module (120) allein und in Kombination verwendbar ist;
Entwickeln von Lösungen in Bezug auf Fahrzeuge durch die mehreren Module (120), und
Speichern und Verteilen der entwickelten Lösungen durch den Server (124), wobei die mehreren Module (120) aus einer Gruppe ausgewählt sind, die ein Vorrichtungsmodul (102), ein Firmwaremodul (104), ein Datenmodul (106), ein Analysemodul (108), ein Lösungsmodul (110), ein Anzeigemodul (112), ein digitales Infrastrukturmodul (114), ein Einbeziehungsmodul (116) und ein Geschäftsmodul (118) umfasst, und
wobei das Vorrichtungsmodul (102), indem eine Vorrichtung und/oder Module der Vorrichtung zum Erzeugen von Daten, die für mindestens eine Lösung erforderlich sind, durch das Vorrichtungsmodul (102) ausgewählt werden und auf diese zugegriffen wird, das Erfassen der Vorrichtung und/oder der Module der Vorrichtung über eine Quelle ermöglicht, die mit dem Server (124) verknüpft ist, der aus einer proprietären Quelle und einer E-Commerce-Quelle ausgewählt ist,
Ermöglichen einer Schnittstelle und Kommunikation, durch das Firmwaremodul (104), der mindestens einen Vorrichtung, die aus dem Vorrichtungsmodul (102) ausgewählt ist, mit dem Fahrzeug und dem digitalen Infrastrukturmodul (114),
Speichern und Vorverarbeiten, durch das Datenmodul (106), von Rohdaten, die durch die mindestens eine Vorrichtung erzeugt werden, wobei die Rohdaten und verarbeiteten Daten für die Entwicklung der mindestens einen Lösung verfügbar sind,
selektives Analysieren, durch das Analysemodul (108), der Daten, die von dem Vorrichtungsmodul (102) und/oder dem Datenmodul (106) empfangen werden, wobei das Analysemodul (108) aus mindestens einem von künstlicher Intelligenz (KI), Deep Learning (DL), Machine Learning (ML) und Behavioral Science (BS) ausgewählt wird,
Bereitstellen, durch das Lösungsmodul (110), eines Repositorys von mindestens einem Problem, einem teilweise gelösten Problem und entwickelten Lösungen,
Entwickeln, über das Anzeigemodul (112), von Benutzerschnittstellen (UIs) für die entwickelte Lösung,
Implementieren und Einsetzen der entwickelten Lösungen über das digitale Infrastrukturmodul (114),
Zugreifen auf, Verbinden und Kommunizieren mit verfügbaren Daten, Gemeinschaften und Netzwerken über das Einbeziehungsmodul (116), zur Entwicklung der mindestens einen Lösung, und
Monetarisieren, über das Geschäftsmodul (118), der entwickelten Lösungen.

5. Verfahren nach Anspruch 4, wobei das Zugreifen auf den Server (124) durch mindestens einen Lösungsanforderer und einen Lösungsanbieter, der Lösungsanforderer ein Problem unter Verwendung des Lösungsmoduls (110) postet und der Lösungsanbieter das Problem unter Verwendung der mehreren Module (120) löst, wobei der Lösungsanbieter das Problem durch eine unabhängige Zusammenarbeit mit mindestens einem zweiten Lösungsanbieter löst.

6. Verfahren nach Anspruch 5, wobei die mindestens zwei Benutzer von mindestens einer von derselben Organisation und unterschiedlichen Organisationen stammen.

## Revendications

1. Système (100) de développement collaboratif et de distribution de solutions,
ledit système (100) comprenant :
un serveur (124) ;
au moins un dispositif terminal (130) pouvant être connecté audit serveur (124) par l'intermédiaire d'une connexion filaire et/ou d'une connexion sans fil, et
au moins un processeur (122), ledit processeur (122) établissant une communication entre ledit serveur (124) et ledit ou au moins desdits dispositifs terminaux (130) après une authentification, ledit processeur (122) et ledit serveur (124) fournissant un environnement-cadre pour le développement et la distribution de solutions en rapport avec les véhicules, et étant adaptés pour restituer une pluralité de modules (120) dans au moins un dispositif terminal (130) en fonction d'une demande d'accès, ladite pluralité de modules (120) pouvant être affichée sur une interface d'affichage dudit ou desdits dispositifs terminaux (130),
exécuter des instructions générées à partir de ladite pluralité de modules (120) pour le développement d'une solution, lesdites instructions étant générées par un utilisateur dudit ou desdits dispositifs terminaux (130) qui est en communication avec ledit serveur (124), ladite pluralité de modules (120) étant accessible par l'intermédiaire d'une unité d'entrée dudit ou desdits dispositifs terminaux (130), chacun de ladite pluralité de modules (120) étant utilisable seul et en combinaison, et
stocker dans ledit serveur, en vue d'une distribution, lesdites solutions développées,
ladite pluralité de modules (120) étant sélectionnée dans un groupe comprenant un module (102) de dispositif, un module (104) de microprogramme, un module (106) de données, un module (108) d'analyse, un module (110) de solution, un module (112) d'affichage, un module (114) d'infrastructure numérique, un module (116) d'implication et un module commercial (118),
ledit module (102) de dispositif comprenant des renseignements d'un dispositif et/ou de modules dudit dispositif qui collecte ou génère des données nécessaires pour au moins une solution, ledit module (102) de dispositif donnant également accès audit dispositif et/ou aux modules dudit dispositif à travers une source sélectionnée parmi une source propriétaire et une source de commerce électronique,
ledit module (104) de microprogramme fournissant des données nécessaires au fonctionnement dudit ou desdits dispositifs sélectionnés parmi ledit module (102) de dispositif avec ledit véhicule et ledit module (114) d'infrastructure numérique,
ledit module (106) de données mémorisant et prétraitant des données brutes générées par ledit ou lesdits dispositifs, lesdites données brutes et les données traitées étant mises à disposition dudit utilisateur dudit ou desdits dispositifs terminaux (130) pour le développement de ladite ou desdites solutions,
ledit module (108) d'analyse fournissant au moins un sous-module de traitement détaillé desdites données reçues en provenance dudit module (106) de données, ledit ou lesdits sous-modules étant sélectionné à partir d'au moins l'un parmi l'intelligence artificielle (AI), l'apprentissage profond (DL), l'apprentissage automatique (ML), et les sciences comportementales (BS),
ledit module (110) de solution étant un référentiel de problèmes, de solution en cours et de solutions développées,
ledit module (112) d'affichage fournissant une pluralité d'outils de développement d'une interface d'utilisateur (UI) de ladite ou desdites solutions,
ledit module (114) d'infrastructure numérique fournissant une pluralité de sous-modules de connectivité nécessaires à une mise en œuvre et un déploiement sécurisés desdites solutions développées pour ledit véhicule,
ledit module (116) d'implication permettant une communication et une interaction avec au moins un autre utilisateur par rapport audit module (102) de dispositif, audit module (104) de microprogramme, audit module (106) de données, audit module (108) d'analyse, audit module (110) de solution, audit module (112) d'affichage, audit module (114) d'infrastructure numérique et audit module commercial (118), et
ledit module commercial (118) permettant de trouver des clients et de monétiser des solutions développées.

2. Système (100) selon la revendication 1, ledit système (100) étant utilisé par au moins deux utilisateurs, à savoir un demandeur de solution et un fournisseur de solution, ledit demandeur de solution publiant un problème au moyen d'une interface qui est ensuite stocké dans ledit module (110) de solution, et ledit fournisseur de solution résolvant ledit problème au moyen de ladite pluralité de modules (120), ledit fournisseur de solution résolvant ladite solution demandée, que ce soit indépendamment ou en communication avec au moins un deuxième fournisseur de solution.

3. Système (100) selon la revendication 2, lesdits au moins deux utilisateurs étant sélectionnés à partir d'une même organisation et/ou d'organisations disparates.

4. Procédé de développement collaboratif et d'approvisionnement de solutions,
ledit procédé comprenant les étapes de :
établir une connexion entre un serveur (124) et un dispositif terminal (130) ;
restituer une pluralité de modules (120) dans ledit dispositif terminal (130), ladite pluralité de modules (120) étant accessible par une unité d'entrée dudit dispositif terminal (130), et chacun de ladite pluralité de modules (120) étant utilisable seul et en combinaison ;
développer des solutions en rapport avec des véhicules à travers ladite pluralité de modules (120) ; et
stocker et distribuer lesdites solutions développées par l'intermédiaire dudit serveur (124), ladite pluralité de modules (120) étant sélectionnée parmi un groupe comprenant un module (102) de dispositif, un module (104) de microprogramme, un module (106) de données, un module (108) d'analyse, un module (110) de solution, un module (112) d'affichage, un module (114) d'infrastructure numérique, un module (116) d'implication et un module commercial (118), et
sélectionner et accéder par l'intermédiaire dudit module (102) de dispositif à un dispositif et/ou à des modules dudit dispositif pour générer des données nécessaires à au moins une solution, ledit module (102) de dispositif permettant l'acquisition dudit dispositif et/ou desdits modules dudit dispositif par une source liée audit serveur (124) sélectionnée parmi une source propriétaire et une source de commerce électronique,
permettre l'interfaçage et la communication, à travers ledit module (104) de microprogramme, dudit ou desdits dispositifs sélectionnés parmi ledit module (102) de dispositif avec ledit véhicule et ledit module (114) d'infrastructure numérique,
stockage et prétraitement, par ledit module (106) de données, de données brutes générées par ledit ou lesdits dispositifs, lesdites données brutes et les données traitées étant disponibles pour le développement de ladite ou desdites solutions,
analyse sélective, par ledit module (108) d'analyse, desdites données reçues en provenance d'au moins un dudit module (102) de dispositif et dudit module (106) de données, ledit module (108) d'analyse étant sélectionné à partir d'au moins l'un parmi l'intelligence artificielle (AI), l'apprentissage profond (DL), l'apprentissage automatique (ML) et la science comportementale (BS),
fourniture, par l'intermédiaire dudit module (110) de solution, d'un référentiel d'au moins un problème, d'un problème partiellement résolu et de solutions développées,
développement, par l'intermédiaire dudit module (112) d'affichage, d'interfaces utilisateur (UI) pour ladite solution développée,
mise en œuvre et déploiement, par l'intermédiaire dudit module (114) d'infrastructure numérique, desdites solutions développées,
accès, connexion et communication, par l'intermédiaire dudit module (116) d'implication, à des données, des communautés et des réseaux disponibles pour le développement de ladite ou desdites solutions, et
monétisation, par l'intermédiaire dudit module commercial (118), desdites solutions développées.

5. Procédé selon la revendication 4, comprenant l'accès audit serveur (124), par au moins un demandeur de solution et un fournisseur de solution, ledit demandeur de solution publiant un problème en utilisant ledit module (110) de solution, et ledit fournisseur de solution résolvant ledit problème en utilisant ladite pluralité de modules (120), ledit fournisseur de solution résolvant ledit problème, que ce soit indépendamment ou en collaboration avec au moins un second fournisseur de solution.

6. Procédé selon la revendication 5, lesdits au moins deux utilisateurs provenant d'une même organisation et/ou d'organisations disparates.
